# FASCICULE DE BREVET EUROPEEN

(11) **EP 1 380 242 B1**
(45) Date de publication et mention de la délivrance du brevet: **12.05.2004**
(21) Numéro de dépôt: 02356107.9
(22) Date de dépôt: 12.06.2002
(51) Int. Cl.: A47J 27/04

(54) **Base chauffante pour appareil de production de vapeur**
Heizsockel für Dampfkochgerät
Heating base for a steam generator appliance

(43) Date de publication de la demande: 14.01.2004
(73) Titulaire: SEB S.A., 69130 Ecully (FR)
(72) Inventeur: Payen, Jean-Marc, 21800 Quetigny (FR)
(74) Mandataire: Kiehl, Hubert

(56) Documents cités:
- EP-A- 0 788 754
- WO-A-00/30510
- US-A- 5 649 476

## Description

La présente invention se rapporte au domaine technique général des appareils pour chauffer de l'eau. La présente invention concerne plus particulièrement les appareils prévus pour produire de la vapeur. La présente invention s'applique notamment, mais non exclusivement, aux bases chauffantes pour cuiseurs à la vapeur.

Il est connu notamment du document WO 00/30510 une base chauffante de cuiseur vapeur comportant un élément chauffant entouré par une couronne délimitant un réservoir extérieur d'eau froide et un réservoir intérieur de chauffe. Les deux réservoirs communiquent par un passage ménagé dans la partie inférieure de la couronne. Cette disposition permet de limiter la taille du réservoir chauffé par l'élément chauffé, et ainsi d'obtenir plus rapidement de la vapeur.

Toutefois il a été observé que dans de tels appareils le détartrage de l'élément chauffant est difficile à réaliser. L'eau utilisée pour la production de vapeur est généralement issue du réseau de distribution. Suivant la région l'eau utilisée est plus ou moins chargée en sels minéraux et l'élément chauffant est recouvert plus ou moins rapidement par un dépôt de calcaire. L'élément chauffant utilisé dans de tels appareils comporte généralement une enveloppe en aluminium moulé revêtu de PTFE ou de laque. La fragilité de ces revêtements conduit à déconseiller un nettoyage mécanique, et à préférer une attaque chimique au moyen d'un agent détartrant tel que par exemple du vinaigre. L'inconvénient des éléments chauffants formant une protubérance est alors la quantité d'agent détartrant nécessaire. Un autre inconvénient est lié à l'odeur d'un agent détartrant tel que le vinaigre. Cette odeur peut imprégner les parois du réservoir d'eau lorsque celles-ci sont réalisées en matière plastique.

L'objet de la présente invention est de proposer un dispositif de production de vapeur, dans lequel la production de vapeur est rapide et dans lequel le détartrage est facilité.

Un autre objet de la présente invention est de proposer un dispositif de production de vapeur du type précité, dans lequel le détartrage est économique.

Un autre objet de la présente invention est de proposer un dispositif de production de vapeur du type précité, permettant de limiter l'imprégnation d'éléments odoriférants lors du détartrage.

Un autre objet de la présente invention est de proposer un dispositif de production de vapeur du type précité, dont l'utilisation est particulièrement simple.

Ces objets sont atteints avec une base chauffante pour appareil de production de vapeur, comportant un réceptacle dans lequel est monté un élément chauffant, un élément séparateur amovible susceptible d'être mis en place dans le réceptacle pour délimiter un réservoir de volume réduit dans lequel est agencé l'élément chauffant, caractérisé en ce que l'élément séparateur amovible peut occuper une position dans laquelle le réservoir de volume réduit n'est pas en communication avec le volume du réceptacle. Ces dispositions permettent de délimiter autour de l'élément chauffant un volume de chauffe réduit. De ce fait, la quantité de produit utilisée pour le détartrage peut être réduite, sans affecter l'efficacité du détartrage. De plus, la proportion des surfaces du réceptacle au contact avec le produit détartrant peut aussi être réduite.

Avantageusement, un moyen d'étanchéité spécifique est prévu entre le réceptacle et l'élément séparateur amovible. Ce moyen d'étanchéité spécifique peut consister par exemple en un joint monté dans le réceptacle ou sur l'élément séparateur amovible. En alternative, l'élément séparateur peut être simplement plaqué contre le réceptacle pour former le réservoir de volume réduit.

Avantageusement, des moyens de maintien sont prévus pour immobiliser l'élément séparateur amovible monté dans le réceptacle. Ces moyens de maintien peuvent consister par exemple en un dispositif de verrouillage à baïonnettes, ou par une paroi latérale de l'élément séparateur amovible insérée dans une gorge, dans une ouverture ou contre une nervure du réceptacle.

Selon un mode de réalisation, l'élément séparateur amovible est formé par une couronne susceptible d'être agencée autour de l'élément chauffant. En d'autres termes, l'élément séparateur amovible est annulaire. L'élément séparateur amovible repose alors par exemple sur le fond du réceptacle. Seule une petite partie du fond du réceptacle autour de l'élément chauffant est alors en contact avec le produit détartrant. Cette disposition limite l'imprégnation du réceptacle par le produit détartrant.

Selon un autre mode de réalisation, l'élément séparateur amovible est formé par une cloison susceptible de coopérer avec des parois latérales du réceptacle. L'élément séparateur amovible est alors par exemple inséré dans une rainure. Le réceptacle est divisé en deux parties adjacentes.

Selon un autre mode de réalisation, l'élément séparateur amovible est formé par un moyen d'obturation susceptible de boucher un passage reliant deux parties du réceptacle, l'élément chauffant étant agencé dans l'une des parties. De préférence alors, l'élément séparateur amovible est au moins partiellement déformable, pour assurer une bonne étanchéité.

Selon une caractéristique avantageuse, l'élément séparateur amovible est susceptible d'occuper dans le réceptacle une position ménageant un passage entre un réservoir d'eau et une chambre d'ébullition dans laquelle est agencé l'élément chauffant. Alors, selon une forme de réalisation, l'élément séparateur amovible est annulaire et le réservoir d'eau froide est agencé autour de la chambre d'ébullition. Selon une autre forme de réalisation, l'élément séparateur amovible coopère avec des parois latérales du réceptacle et le réservoir d'eau froide est adjacent à la chambre d'ébullition. Le passage peut être ménagé dans la paroi de l'élément séparateur amovible, dans la paroi du réceptacle ou entre l'élément séparateur amovible et le réceptacle. L'élément séparateur amovible peut aussi être formé par un clapet ou un bouchon monté dans un passage reliant deux parties du réceptacle.

Selon une forme de réalisation, l'élément chauffant est monté dans le fond du réceptacle et forme une protubérance par rapport au fond du réceptacle. Cette disposition permet d'offrir une plus grande surface de chauffe et de réduire le volume d'eau à vaporiser.

Avantageusement alors, pour permettre un détartrage complet de l'élément chauffant, le réservoir de volume réduit présente une hauteur supérieure à la hauteur de l'élément chauffant.

Avantageusement encore, l'élément séparateur amovible présente un repère de niveau pour le remplissage de la solution détartrante. Ce repère de niveau peut être plus bas que le sommet de la protubérance de l'élément chauffant, du fait de l'agitation de la solution détartrante lors de l'ébullition.

Ces objets sont également atteints avec une partie inférieure de cuiseur vapeur, comportant une base chauffante du type précité associée à un élément séparateur amovible en forme de couronne, et un bac récupérateur à jus disposé de manière amovible sur la base chauffante, l'élément séparateur amovible étant susceptible d'occuper dans le réceptacle de la base chauffante une première position ménageant un réservoir de volume réduit autour de l'élément chauffant et une deuxième position ménageant un passage entre un réservoir d'eau et la chambre d'ébullition, du fait que l'élément séparateur amovible comporte des languettes prévues pour coopérer avec des nervures du bac récupérateur à jus lorsque l'élément séparateur amovible occupe dans le réceptacle une position dans laquelle le réservoir de volume réduit n'est pas en communication avec le volume du réceptacle. Cette disposition gênant la mise en place du bac récupérateur à jus permet d'avertir que l'appareil n'est pas en position de cuisson.

L'invention sera mieux comprise à l'étude de quatre exemples de réalisation, pris à titre nullement limitatif, illustrés dans les figures annexées, dans lesquelles :
- la figure 1 est une vue en coupe selon un plan vertical d'un cuiseur vapeur dont la base comporte un dispositif de détartrage selon l'invention, présenté en position de cuisson, l'élément chauffant n'étant pas affecté par la coupe,
- la figure 2 est une vue en perspective d'un élément du dispositif de détartrage,
- la figure 3 est une vue en coupe de la partie inférieure du cuiseur vapeur montré à la figure 1, selon la direction perpendiculaire, dans la position de cuisson,
- la figure 4 est une vue en coupe de la partie inférieure du cuiseur vapeur montré à la figure 1, selon la direction perpendiculaire, dans la position de détartrage, illustrant la position modifiée occupée par le bac récupérateur.
- la figure 5 est une vue schématique en coupe d'un deuxième exemple de réalisation d'une base chauffante pour cuiseur vapeur.
- la figure 6 est une vue schématique en coupe d'un troisième exemple de réalisation d'une base chauffante pour cuiseur vapeur.
- la figure 7 est une vue schématique en coupe d'un quatrième exemple de réalisation d'une base chauffante pour cuiseur vapeur.

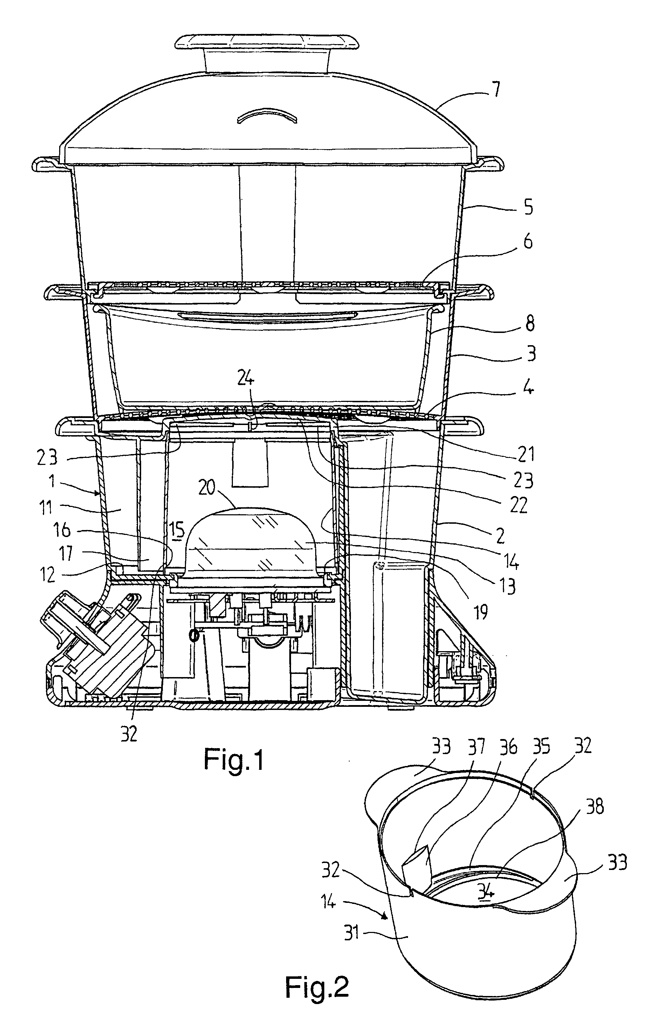

Le cuiseur vapeur illustré à la figure 1 comporte une base chauffante 1, un bac récupérateur à jus 2, disposé sur la base 1, un premier récipient de cuisson 3 à fond perforé 4, disposé sur le bac 2, un deuxième récipient de cuisson 5 à fond perforé amovible 6, disposé sur le récipient 3, un couvercle 7 fermant le récipient 5, et un bol 8 pour la cuisson du riz, disposé sur le fond 4.

La base 1 comporte un réceptacle 11 présentant un fond 12. Le réceptacle 11 est par exemple réalisé en polypropylène. Un élément chauffant 13 est monté dans le fond 12. L'élément chauffant 13 forme une protubérance par rapport au fond 12. Un joint 19 est monté entre le fond 12 et l'élément chauffant 13. Le joint 19 entoure l'élément chauffant 13. Une nervure annulaire 10 issue du fond 12 entoure le joint 19.

Une couronne 14 est agencée dans le réceptacle 11 autour de l'élément chauffant 13. La couronne 14 repose sur le fond 12. La couronne 14 délimite une chambre d'ébullition 15 autour de l'élément chauffant 13. Un passage 16 met en communication la chambre d'ébullition 15 avec un réservoir d'eau 17 ménagé dans le réceptacle 11. Le passage 16 est formé par une encoche 32 ménagée dans la partie inférieure de la couronne 14 à proximité du fond 12. La partie supérieure de la couronne 14 est agencée dans une cheminée 21 du bac récupérateur 2. La cheminée 21 présente un toit 22. Des ouvertures 23 prévues pour le passage de la vapeur sont ménagées dans la paroi latérale de la cheminée 21.

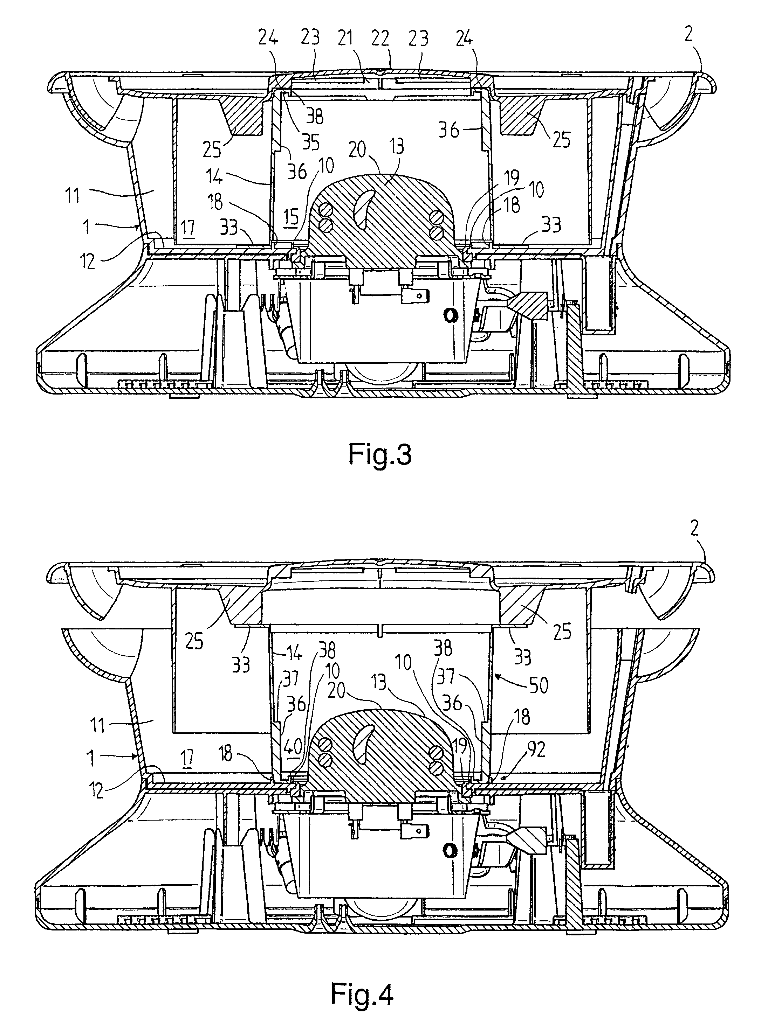

Tel que mieux visible à la figure 2, la couronne 14 comporte une paroi latérale tubulaire 31. Deux encoches 32 sont ménagées sur l'une des extrémités de la paroi 31 de manière diamétralement opposée. Sur la même extrémité deux languettes 33 s'étendent à l'extérieur de la paroi 31. L'extrémité opposée de la paroi 31 présente une ouverture 34 de largeur plus réduite, du fait de la présence de rebords internes 35 s'étendant à partir de la paroi 31. Un bossage interne 36 permet de réaliser un repère de niveau 37. La couronne 14 présente également un deuxième bossage interne diamétralement opposé, visible aux figures 3 et 4. Une paroi latérale tubulaire interne 38 délimitant l'ouverture 34 prolonge les rebords 35 vers l'intérieur de la couronne 14, et permet de rigidifier cette extrémité de la couronne 14.

La figure 3 montre la partie inférieure du cuiseur vapeur selon une direction perpendiculaire à celle de la figure 1. Les languettes 33 de la couronne 14 reposent sur le fond 12 du réceptacle 11 de la base 1. La couronne 14 est mise en place autour de deux nervures de positionnement 18 issues du fond 12. Le bac 2 comporte deux nervures de repos 24 agencés sous le toit 22 de la cheminée 21. Les nervures 24 reposent sur les rebords internes 35 de la couronne 14 lorsque le bac récupérateur 2 est en place sur la base 1. La périphérie du bac 2 repose sur la base 1.

La couronne 14 peut être retournée pour occuper la position illustrée à la figure 4. Les nervures de positionnement 18 sont alors disposées autour de la couronne 14. Les nervures 18 présentent une légère dépouille de manière à exercer un léger serrage contre la paroi latérale de la couronne 14. La face extérieure des rebords 35 repose sur le fond 12. Le bac récupérateur 2 comporte deux nervures d'appui 25 prévues pour prendre appui sur les languettes 33 de la couronne 14 occupant la position retournée. Les nervures 25 sont disposées selon le diamètre longitudinal de la cheminée 21. La paroi latérale tubulaire interne 38 de la couronne 14 vient en appui contre la nervure annulaire 10.

La couronne 14 retournée et mise en place autour des nervures 18 forme un élément séparateur amovible 50 délimitant dans le réceptacle 11 un réservoir 40 de taille plus réduite. L'élément chauffant 13 est agencé dans le réservoir 40. L'utilisateur peut remplir le réservoir 40 de liquide détartrant jusqu'au niveau indiqué par les repères 37. Le réservoir 40 présente une hauteur supérieure à la hauteur de l'élément chauffant 13.

Les nervures 18 serrant la paroi latérale de la couronne 14 forment des moyens de maintien 92 de la couronne 14 par rapport à la base chauffante 1. Ces moyens de maintien 92 sont nécessaires pour éviter des fuites du réservoir 40 entre la face extérieure du rebord 35 de la couronne 14 et le fond 12 du réceptacle 11 lors de l'ébullition dans le réservoir 40. Lorsque de la vapeur est produite dans le réservoir 40, la dilatation de la couronne 14 est supérieure à la dilatation des nervures 18, ce qui contribue à augmenter le maintien de la couronne 14 par les nervures 18.

Aucun moyen d'étanchéité spécifique n'est prévu dans l'exemple de réalisation illustré aux figures 1 à 4. Toutefois, à titre de variante, un moyen d'étanchéité spécifique peut être envisagé, par exemple un joint monté sur le fond 12 et/ou un joint monté sur la face extérieure du rebord 35 de la couronne 14.

Les nervures 25 du bac récupérateur 2 coopérant avec les languettes 33 de la couronne 14 permettent d'avertir l'utilisateur voulant effectuer une cuisson que la couronne 14 n'occupe pas une position correcte. Lorsque la couronne 14 occupe la position retournée, l'eau versée autour de la couronne 14 dans le réservoir 17 ne peut atteindre la chambre d'ébullition 15 et l'appareil ne peut pas produire de vapeur.

A titre de variante, non illustrée aux figures, la couronne 14 pourrait être mise en place contre le joint 19, la nervure annulaire 10 pouvant être supprimée. A titre de variante complémentaire, les nervures 18 pourraient également être supprimées.

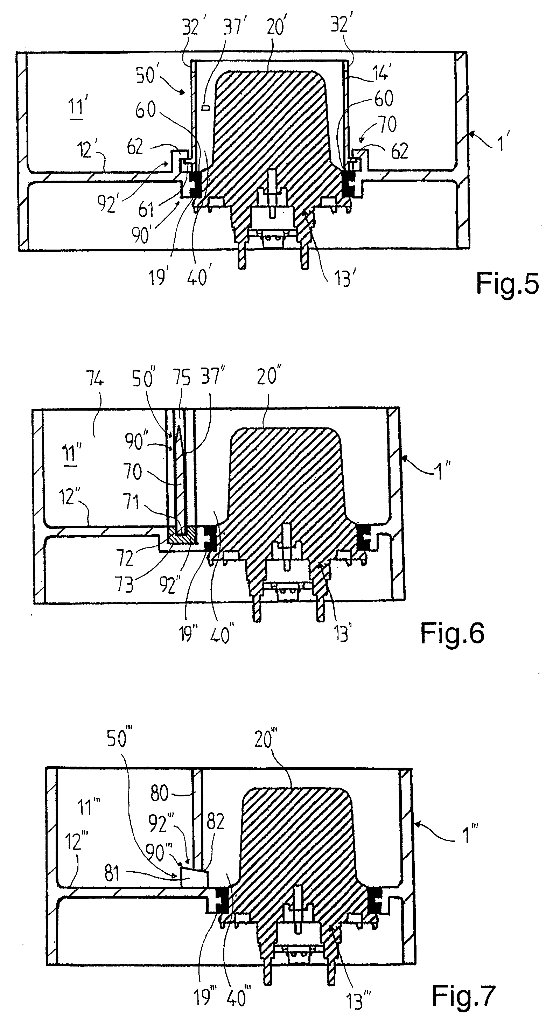

Un deuxième exemple de réalisation est illustré à la figure 5. Cet exemple de réalisation diffère de l'exemple de réalisation précédent par la nature des moyens de maintien 92' de l'élément séparateur amovible 50'. Un joint 19' entoure un élément chauffant 13' monté dans le fond 12' d'un réceptacle 11' d'une base chauffante 1'. L'élément séparateur amovible 50' est formé par une couronne 14' présentant un bord inférieur 60 venant en appui sur le joint 19'. Le joint 19' forme ainsi un moyen d'étanchéité spécifique 90'. La couronne 14' présente des nervures extérieures 61 coopérant avec des ergots de maintien 62 issus du réceptacle 11' pour former des moyens de maintien 92' à baïonnette. La couronne 14' peut être verrouillée sur le fond du réceptacle 11' dans la position illustrée à la figure 4 pour former avec le réceptacle un réservoir 40' de volume réduit. Le niveau de remplissage conseillé est indiqué par un repère 37' à l'intérieur de la couronne 14'.

Une ou plusieurs encoches 32' dans le bord opposé au bord 60 permettent d'utiliser la couronne 14' en position retournée pour la cuisson. Chaque encoche 32' permet de ménager un passage entre un réservoir d'eau et une chambre d'ébullition entourant l'élément chauffant 13'.

A titre de variante, non illustrée aux figures, les encoches 32' pourraient être ménagées dans le bord 60 et, selon la position angulaire de la couronne, coopérer ou non avec des moyens d'obturation issus du fond 12' ou du joint 19'.

Un troisième exemple de réalisation est illustré à la figure 6. Cet exemple de réalisation diffère des exemples de réalisations précédents en ce que l'élément séparateur amovible 50" est formé par une cloison 70 séparant un réceptacle 11" en deux volumes adjacents, et non concentriques. La cloison 70 coopère avec le fond 12" et les parois latérales 74 du réceptacle 11". La cloison est insérée dans une rainure 71 ménagée dans un joint 72 en U monté dans le réceptacle 11". Le joint 72 est monté dans une gorge 73 ménagée dans le fond 12" et les parois latérales 74 du réceptacle 11". Le joint 72 forme ainsi un moyen d'étanchéité spécifique 90". De ce fait, les dimensions du joint 19" et de la cloison 70 sont ajustées pour former des moyens de maintien 92". Un repère de niveau 37" est prévu sur la cloison 70 à l'intérieur du réservoir 40".

La cloison 70 peut être réversible pour être utilisée aussi lors de la cuisson. Une découpe 75 dans la paroi de la cloison 70 permet de ménager un passage entre un réservoir d'eau et une chambre d'ébullition entourant l'élément chauffant 13".

Un quatrième exemple de réalisation est illustré à la figure 7. Cet exemple de réalisation diffère des exemples de réalisation précédents en ce que le réceptacle 11''' est divisé en deux parties par une cloison 80. L'élément séparateur amovible 50''' est formé par un moyen d'obturation 81 susceptible de boucher un passage 82 entre les deux parties du réceptacle 11'''. Le moyen d'obturation 81 est par exemple un bouchon tronconique réalisé en matériau élastomère entré légèrement en force dans le passage 82. Le moyen d'obturation 81 forme ainsi un moyen d'étanchéité spécifique 90"'. Les parois déformables du moyen d'obturation 81 coopérant avec les bords du passage 82 forment des moyens de maintien 92"' de l'élément séparateur amovible 50"' dans le réceptacle 11'''.

Lorsque le moyen d'obturation 81 obture le passage 82, le réservoir de taille réduite 40"' ménagé autour de l'élément chauffant 13''' peut être avantageusement utilisé pour les opérations de détartrage.

Lorsque le moyen d'obturation 81 est retiré, l'eau versée dans l'une ou l'autre des parties du réceptacle 11''' peut atteindre l'élément chauffant 13''' par le passage 82.

A titre de variante complémentaire, l'élément chauffant 13, 13', 13", 13''' ne forme pas nécessairement une protubérance s'élevant à partir du fond 12, 12', 12", 12''' du réceptacle 11, 11', 11", 11'''.

La présente invention n'est nullement limitée aux exemples de réalisation décrits et à leurs variantes, mais englobe de nombreuses modifications dans le cadre des revendications.

## Revendications

1. Base chauffante pour appareil de production de vapeur, comportant un réceptacle (11 ; 11' ; 11" ; 11''') dans lequel est monté un élément chauffant (13 ; 13' ; 13" ; 13'''), un élément séparateur amovible (50 ; 50' ; 50" ; 50"') susceptible d'être mis en place dans le réceptacle (11 ; 11' ; 11" ; 11''') pour délimiter un réservoir (40 ; 40' ; 40" ; 40"') de volume réduit dans lequel est agencé l'élément chauffant (13 ; 13' ; 13" ; 13"'), **caractérisé en ce que** l'élément séparateur amovible (50 ; 50' ; 50" ; 50"') peut occuper une position dans laquelle le réservoir (40 ; 40' ; 40" ; 40''') de volume réduit n'est pas en communication avec le volume du réceptacle (11 ; 11' ; 11" ; 11''').

2. Base chauffante selon la revendication 1, **caractérisé en ce qu'**un moyen d'étanchéité spécifique (90' ; 90" ; 90"') est prévu entre le réceptacle (11' ; 11" ; 11"') et l'élément séparateur amovible (50' ; 50" ; 50"').

3. Base chauffante selon l'une des revendications 1 ou 2, **caractérisé en ce que** des moyens de maintien (92 ; 92' ; 92" ; 92"') sont prévus pour immobiliser l'élément séparateur amovible (50 ; 50' ; 50" ; 50"') monté dans le réceptacle (11 ; 11' ; 11 " ; 11''').

4. Base chauffante selon l'une des revendications 1 à 3, **caractérisé en ce que** l'élément séparateur amovible (50 ; 50') est formé par une couronne (14 ; 14') susceptible d'être agencée autour de l'élément chauffant (13 ; 13').

5. Base chauffante selon l'une des revendications 1 à 3, **caractérisé en ce que** l'élément séparateur amovible (50") est formé par une cloison (70) susceptible de coopérer avec des parois latérales (74) du réceptacle (11").

6. Base chauffante selon l'une des revendications 1 à 3, **caractérisé en ce que** l'élément séparateur amovible (50"') est formé par un moyen d'obturation (81) susceptible de boucher un passage (82) reliant deux parties du réceptacle (11'''), l'élément chauffant (13"') étant agencé dans l'une des parties.

7. Base chauffante selon l'une des revendications 1 à 5, **caractérisé en ce que** l'élément séparateur amovible (50 ; 50' ; 50") est susceptible d'occuper dans le réceptacle (11 ; 11' ; 11 ") une position ménageant un passage (16) entre un réservoir d'eau (17) et une chambre d'ébullition (15) dans laquelle est agencé l'élément chauffant (13).

8. Base chauffante selon l'une des revendications 1 à 7, **caractérisé en ce que** l'élément chauffant (13 ; 13' ; 13" ; 13''') est monté dans le fond (12 ; 12' ; 12" ; 12"') du réceptacle (11 ; 11' ; 11" ; 11''') et forme une protubérance par rapport au fond du réceptacle.

9. Base chauffante selon la revendication 8, **caractérisé en ce que** le réservoir (40 ; 40' ; 40" ; 40"') de volume réduit présente une hauteur supérieure à la hauteur de l'élément chauffant (13 ; 13' ; 13" ; 13"').

10. Base chauffante selon l'une des revendications 1 à 9, **caractérisé en ce que** l'élément séparateur amovible (50 ; 50' ; 50") présente un repère de niveau (37 ; 37' ; 37").

11. Partie inférieure de cuiseur vapeur, comportant une base chauffante (1) selon les revendications 4 et 7, et un bac récupérateur à jus (2) disposé de manière amovible sur la base chauffante (1), **caractérisé en ce que** l'élément séparateur amovible (50) comporte des languettes (33) prévues pour coopérer avec des nervures (25) du bac récupérateur à jus lorsque l'élément séparateur amovible (50) occupe dans le réceptacle (11) une position dans laquelle le réservoir (40) de volume réduit n'est pas en communication avec le volume du réceptacle.

## Claims

1. A heater base for a steam generator appliance, the base comprising a receptacle (11; 11'; 11 "; 11 ''') in which a heater element (13; 13'; 13"; 13"') is mounted, and a removable separator element (50; 50'; 50"; 50"') suitable for being put in place in the receptacle (11; 11'; 11 "; 11 ''') so as to define a small-volume tank (40; 40'; 40"; 40''') in which the heater element (13; 13'; 13"; 13"') is disposed, the base being **characterized in that** the removable separator element (50; 50'; 50"; 50''') can occupy a position in which the small-volume tank (40; 40'; 40"; 40''') is not in communication with the volume of the receptacle (11; 11'; 11"; 11''').

2. A heater base according to claim 1, **characterized in that** specific sealing means (90'; 90"; 90"') are provided between the receptacle (11'; 11 "; 11''') and the removable separator element (50'; 50"; 50''').

3. A heater base according to claim 1 or claim 2, **characterized in that** holding means (92; 92'; 92"; 92''') are provided in order to prevent the removable separator element (50; 50'; 50"; 50"') mounted in the receptacle (11; 11'; 11"; 11"') from moving.

4. A heater base according to any one of claims 1 to 3, **characterized in that** the removable separator element (50; 50') is formed by a ring (14; 14') suitable for being disposed around the heater element (13; 13').

5. A heater base according to any one of claims 1 to 3, **characterized in that** the removable separator element (50") is formed by a partition (70) suitable for co-operating with side walls (74) of the receptacle (11").

6. A heater base according to any one of claims 1 to 3, **characterized in that** the removable separator element (50"') is formed by blocking means (81) suitable for blocking a passage (82) connecting two portions of the receptacle (11"'), the heater element (13"') being disposed in one of the portions.

7. A heater base according to any one of claims 1 to 5, **characterized in that** the removable separator element (50; 50'; 50") is suitable for occupying a position in the receptacle (11; 11'; 11") so as to form a passage (16) between a water tank (17) and a boiling chamber (15) in which the heater element (13) is disposed.

8. A heater base according to any one of claims 1 to 7, **characterized in that** the heater element (13; 13'; 13"; 13''') is mounted in the bottom (12; 12'; 12"; 12"') of the receptacle (11; 11'; 11"; 11''') and forms a projection relative to the bottom of the receptacle.

9. A heater base according to claim 8, **characterized in that** the small-volume tank (40; 40'; 40"; 40"') presents a height that is greater than the height of the heater element (13; 13'; 13"; 13"').

10. A heater base according to any one of claims 1 to 9, **characterized in that** the removable separator element (50; 50'; 50") presents a depth indicator (37; 37'; 37").

11. A bottom portion of a steam cooker, the bottom portion comprising a heater base (1) according to claims 4 and 7, and a drip tray (2) disposed in removable manner on the heater base (1), the bottom portion being **characterized in that** the removable separator element (50) includes tabs (33) provided so as to co-operate with ribs (25) of the drip tray when the removable separator element (50) occupies, in the receptacle (11), a position in which the small-volume tank (40) is not in communication with the volume of the receptacle.

## Patentansprüche

1. Heizsockel für ein Dampferzeugungsgerät, mit einem Behälter (11; 11'; 11''; 11''') , in dem ein Heizelement (13; 13'; 13"; 13''') montiert ist, und mit einem abnehmbaren Trennelement (50; 50'; 50"; 50'''), das in den Behälter (11; 11'; 11"; 11''') eingesetzt werden kann, um ein im Volumen geringeres Reservoir (40; 40'; 40"; 40''') einzugrenzen, in welchem das Heizelement (13; 13'; 13"; 13''') angeordnet ist, **dadurch gekennzeichnet, dass** das abnehmbare Trennelement (50; 50'; 50"; 50''') eine Stellung einnehmen kann, in der das im Volumen geringere Reservoir (40; 40'; 40"; 40''') nicht mit dem Volumen des Behälters (11; 11'; 11"; 11''') in Verbindung steht.

2. Heizsockel nach Anspruch 1, **dadurch gekennzeichnet, dass** zwischen dem Behälter (11'; 11 "; 11''') und dem abnehmbaren Trennelement (50'; 50"; 50''') ein spezielles Dichtmittel (90'; 90"; 90''') vorgesehen ist.

3. Heizsockel nach einem der Ansprüche 1 oder 2, **dadurch gekennzeichnet, dass** Haltemittel (92; 92'; 92"; 92''') vorgesehen sind, um das im Behälter (11; 11'; 11"; 11''') montierte, abnehmbare Trennelement (50; 50'; 50"; 50''') festzulegen.

4. Heizsockel nach einem der Ansprüche 1 bis 3, **dadurch gekennzeichnet, dass** das abnehmbare Trennelement (50; 50') aus einem Ring (14; 14') gebildet ist, der um das Heizelement (13; 13') herum angeordnet werden kann.

5. Heizsockel nach einem der Ansprüche 1 bis 3, **dadurch gekennzeichnet, dass** das abnehmbare Trennelement (50") aus einer Wandung (70) gebildet ist, die mit Seitenwandungen (74) des Behälters (11") zusammenwirken kann.

6. Heizsockel nach einem der Ansprüche 1 bis 3, **dadurch gekennzeichnet, dass** das abnehmbare Trennelement (50''') aus einem Verschließmittel (81) gebildet ist, das einen zwei Teile des Behälters (11''') verbindenden Durchgang (82) verschließen kann, wobei das Heizelement (13''') in einem der Teile angeordnet ist.

7. Heizsockel nach einem der Ansprüche 1 bis 5, **dadurch gekennzeichnet, dass** das abnehmbare Trennelement (50; 50'; 50") im Behälter (11; 11', 11'') eine Stellung einnehmen kann, die einen Durchgang (16) zwischen einem Wasserreservoir (17) und einer Siedekammer (15) bildet, in welcher das Heizelement (13) angeordnet ist.

8. Heizsockel nach einem der Ansprüche 1 bis 7, **dadurch gekennzeichnet, dass** das Heizelement (13; 13'; 13"; 13''') im Boden (12; 12'; 12"; 12"') des Behälters (11; 11'; 11"; 11''') montiert ist und einen Vorsprung gegenüber dem Behälterboden bildet.

9. Heizsockel nach Anspruch 8, **dadurch gekennzeichnet, dass** das im Volumen geringere Reservoir (40; 40'; 40"; 40''') in der Höhe größer ist als das Heizelement (13; 13'; 13"; 13''').

10. Heizsockel nach einem der Ansprüche 1 bis 9, **dadurch gekennzeichnet, dass** das abnehmbare Trennelement (50; 50'; 50") eine Pegelmarkierung (37; 37'; 37") enthält.

11. Unterteil eines Dampfkochers, mit einem Heizsockel (1) nach Anspruch 4 und 7 und mit einem Saftauffanggefäß (2), das abnehmbar am Heizsockel (1) angeordnet ist, **dadurch gekennzeichnet, dass** das abnehmbare Trennelement (50) Zungen (33) enthält, die dazu vorgesehen sind, mit Rippen (25) des Saftauffanggefäßes dann zusammenzuwirken, wenn das abnehmbare Trennelement (50) im Behälter (11) eine Stellung einnimmt, in welcher das im Volumen geringere Reservoir (40) nicht mit dem Volumen des Behälters in Verbindung steht
